# FASCICULE DE BREVET EUROPEEN

(11) **EP 3 350 014 B1**
(45) Date de publication et mention de la délivrance du brevet: **26.06.2019**
(21) Numéro de dépôt: 16769924.8
(22) Date de dépôt: 14.09.2016
(51) Int. Cl.: B60K 37/06, B60K 35/00, G05G 1/08, G05G 1/10, G05G 5/00, G05G 5/28, G05G 5/03, G05G 1/015

(54) **SÉLECTEUR DE COMMANDE D'UN VÉHICULE AUTOMOBILE ET PROCÉDÉ DE SÉLECTION D'UNE COMMANDE DE VÉHICULE AUTOMOBILE**
BEFEHLSSELEKTOR FÜR EIN KRAFTFAHRZEUG UND VERFAHREN ZUR AUSWAHL EINES KRAFTFAHRZEUGBEFEHLS
COMMAND SELECTOR FOR A MOTOR VEHICLE AND METHOD FOR SELECTING A MOTOR VEHICLE COMMAND

(30) Priorité: 14.09.2015 FR 1558578
(43) Date de publication de la demande: 25.07.2018
(73) Titulaire: Valeo Comfort and Driving Assistance, 94046 Créteil Cedex (FR)
(72) Inventeur: KUOCH, Siav Kuong, 94046 Créteil Cedex (FR)
(74) Mandataire: Delplanque, Arnaud
(86) Numéro de dépôt international: PCT/EP2016/071738
(87) Numéro de publication internationale: WO 2017/046188

(56) Documents cités:
- WO-A1-2015/033034
- US-A1- 2011 163 978
- US-A1- 2011 285 618

## Description

La présente invention concerne un sélecteur de commande d'un véhicule automobile. L'invention concerne également un procédé de sélection d'une commande mis en oeuvre au moyen d'un tel sélecteur.

Le retour haptique, généré par exemple à l'utilisateur manipulant une molette, est généralement composé de forces de résistance de valeurs variables, créant des points durs et paliers, correspondant à différentes commandes pour les dispositifs pilotés via l'interface. Le retour haptique est avantageux en voiture car il ne nécessite que peu d'attention de la part du conducteur, en particulier, il ne nécessite pas que le conducteur détourne son regard de la route.

On connait des interfaces comportant un fluide magnéto-rhéologique capable de créer un effort de freinage à un élément rotatif dans le fluide lorsqu'un champ magnétique est appliqué sur le fluide du fait que la viscosité du fluide magnéto-rhéologique change avec l'intensité du champ magnétique appliqué. Les fluides magnéto-rhéologiques peuvent ainsi générer un effort de freinage sur l'élément rotatif baignant dans le fluide. La fluidité augmente ou diminue, l'utilisateur percevant un changement d'effort.

Afin de reproduire le crantage mécanique d'un bouton de commande mécanique classique indexant une position, l'effort de freinage généré par l'interface à fluide magnéto-rhéologique peut bloquer le déplacement du bouton de commande puis laisser le bouton de commande se déplacer après qu'un effort suffisant ait été exercé suffisamment longtemps sur le bouton de commande. Avec ces conditions de seuils d'effort et de durée, on évite des déclenchements intempestifs.

On constate cependant que cette indexation peut manquer de précision, l'utilisateur ne sachant notamment pas si sa requête de changement de commande est bien prise en considération puisque le bouton de commande ne bouge pas dans un premier temps.

WO2015033034A1 divilgue un sélecteur de commande d'un véhicule automobile, comportant :
un organe de commande configuré pour sélectionner au moins une position de commande,
un module de fluide magnéto-rhéologique comprenant :
   - un fluide magnéto-rhéologique en contact avec un élément mobile de l'organe de commande,
   - une unité d'application d'un champ magnétique,
   - au moins une bobine pour appliquer un champ magnétique au fluide magnéto-rhéologique,
   - l'unité d'application d'un champ magnétique étant configurée pour modifier l'alimentation de la bobine afin de modifier une force de résistance générée à l'utilisateur déplaçant l'organe de commande,
un capteur de force configuré pour mesurer une force exercée sur l'organe de commande, et
une unité de traitement reliée au capteur de force, configurée pour commander l'unité d'application d'un champ magnétique.

Un but de la présente invention est de proposer une interface pour véhicule automobile qui résout au moins en partie les inconvénients de l'état de la technique.

A cet effet, l'invention a pour objet un sélecteur de commande d'un véhicule automobile, comportant :
- un organe de commande configuré pour sélectionner au moins une position de commande,
- un module de fluide magnéto-rhéologique comprenant :
   - un fluide magnéto-rhéologique en contact avec un élément mobile de l'organe de commande,
   - une unité d'application d'un champ magnétique,
   - au moins une bobine pour appliquer un champ magnétique au fluide magnéto-rhéologique,
   - l'unité d'application d'un champ magnétique étant configurée pour modifier l'alimentation de la bobine afin de modifier une force de résistance générée à l'utilisateur déplaçant l'organe de commande,
- un capteur de force configuré pour mesurer une force exercée sur l'organe de commande, et
- une unité de traitement reliée au capteur de force, configurée pour commander l'unité d'application d'un champ magnétique afin d'autoriser le déplacement de l'organe de commande vers une position de commande sélectionnée par l'utilisateur lorsqu'un effort exercé sur l'organe de commande est supérieur à un seuil d'effort prédéterminé au-delà d'un seuil de durée prédéterminée,
caractérisé en ce qu'il comporte un indicateur lumineux comportant des moyens d'éclairage progressifs pour modifier progressivement l'éclairage de l'indicateur lumineux en fonction de la durée de l'exercice de l'effort sur l'organe de commande au-delà du seuil d'effort prédéterminé.

L'utilisateur peut ainsi visualiser que sa commande a bien été prise en compte. L'animation de l'affichage lui permet également d'estimer le temps qu'il lui reste à maintenir l'effort exercé sur l'organe de commande pour changer la commande.

Selon une ou plusieurs caractéristiques du sélecteur, prise seule ou en combinaison,
- l'indicateur lumineux forme un chemin lumineux dont l'éclairage est progressivement modifié, le chemin lumineux étant complètement modifié à la fin de la durée prédéterminée,
- le chemin lumineux présente une forme de cercle ou de ligne,
- ledit organe de commande est un bouton rotatif de commande, un levier pivotant ou un coulisseau de commande mobile linéairement,
- l'organe de commande est un bouton rotatif de commande et l'indicateur lumineux est un anneau entourant au moins partiellement l'organe de commande,
- l'organe de commande est un bouton rotatif de commande, le capteur de force comportant au moins un capteur de couple pour mesurer le couple exercé sur l'organe de commande,
- l'organe de commande est configuré pour sélectionner une position de commande d'une boite de vitesses automatique, les positions de commande activant un mode de stationnement, un mode de marche arrière, un mode de point mort et au moins un mode de marche avant,
- l'organe de commande est en outre configuré pour sélectionner une position de commande d'un mode de conduite autonome,
- l'organe de commande est configuré pour sélectionner un paramètre du système de climatisation, de radio, du téléphone, de ventilation ou de navigation.

L'invention a aussi pour objet un procédé de sélection d'une commande d'un véhicule automobile mis en oeuvre par un sélecteur tel que décrit précédemment, dans lequel :
- on exerce un effort sur l'organe de commande du sélecteur vers une position de commande à atteindre,
- on mesure l'intensité et la durée de l'effort exercé sur l'organe de commande,
- on bloque le déplacement de l'organe de commande tant que l'intensité et la durée de l'effort exercé sur l'organe de commande n'ont pas atteint un seuil d'effort sur une durée prédéfinie et on affiche par un signal lumineux la progression de la durée pendant laquelle l'effort est exercé, et
- on libère le déplacement de l'organe de commande vers la position de commande à atteindre lorsque le seuil de durée prédéterminée est franchi.

D'autres caractéristiques et avantages de l'invention ressortiront de la description suivante, donnée à titre d'exemple et sans caractère limitatif, en regard des dessins annexés sur lesquels :
- la figure 1 représente une vue schématique d'un exemple de réalisation d'un sélecteur,
- la figure 2 représente une vue schématique d'un exemple de réalisation d'un sélecteur comportant un module de fluide magnéto-rhéologique,
- la figure 3 représente un exemple de capteur de force d'un module de fluide magnéto-rhéologique,
- la figure 4a représente une première étape de fonctionnement du sélecteur,
- la figure 4b représente une deuxième étape de fonctionnement du sélecteur, successive à la première étape,
- la figure 4c représente une troisième étape de fonctionnement du sélecteur, successive à la deuxième étape, et
- la figure 4d représente une quatrième étape de fonctionnement du sélecteur, successive à la troisième étape.

Sur ces figures, les éléments identiques portent les mêmes numéros de référence.

Sur ces figures, les éléments identiques portent les mêmes numéros de référence. Les réalisations suivantes sont des exemples.

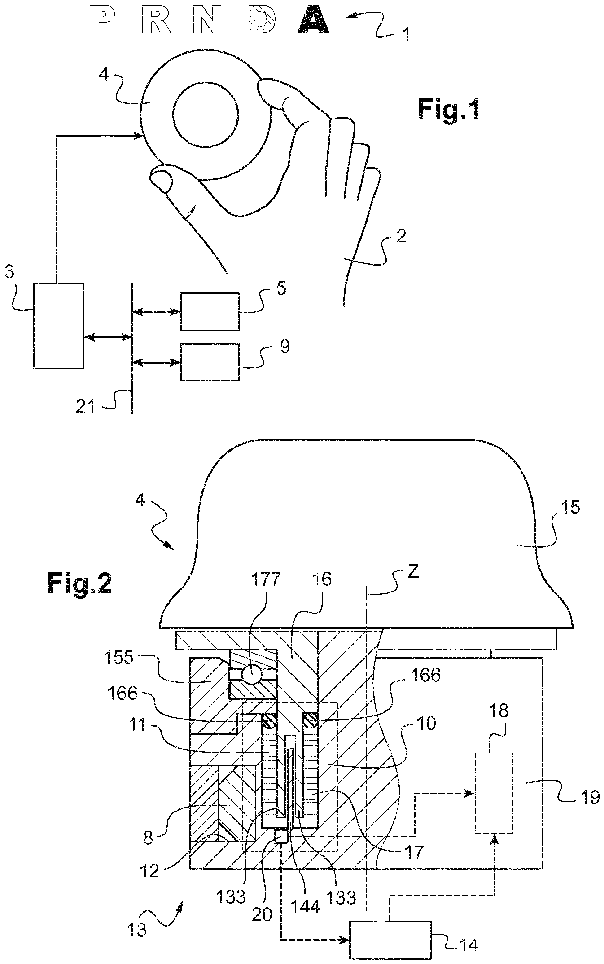

La figure 1 représente un sélecteur 1 de commande de véhicule automobile.

Le sélecteur 1 comporte un organe de commande 4 configuré pour sélectionner au moins une position de commande. Les différentes positions de commande qui peuvent être sélectionnées par l'organe de commande 4 sont configurées pour pouvoir être sélectionnées successivement, l'une à la place de l'autre, avec une disposition ordonnée prédéfinie.

L'organe de commande 4 est mobile et manipulable par le conducteur 2. C'est par exemple un bouton rotatif de commande, un levier pivotant ou un coulisseau de commande mobile linéairement.

La figure 1 représente un exemple de réalisation d'un organe de commande 4 réalisé par un bouton rotatif de commande en forme d'anneau.

Le sélecteur 1 est par exemple monté dans le tableau de bord ou dans une console centrale du véhicule.

L'organe de commande 4 est par exemple configuré pour sélectionner un paramètre du système de climatisation, de radio, du téléphone, de ventilation ou de navigation.

Le sélecteur 1 comporte en outre un module de fluide magnéto-rhéologique 13, un capteur de force 21 configuré pour mesurer une force exercée sur l'organe de commande 4 et une unité de traitement 3.

Le module de fluide magnéto-rhéologique 13 comprend :
- un fluide magnéto-rhéologique 17 en contact avec un élément mobile 16 de l'organe de commande 4, mobile en rotation (figure 2) ou translation,
- une unité d'application d'un champ magnétique 14,
- au moins une bobine 18 pour appliquer un champ magnétique au fluide magnéto-rhéologique 17,
- l'unité d'application d'un champ magnétique 14 étant configurée pour modifier l'alimentation de la bobine 18 afin de modifier une force de résistance opposée à l'utilisateur 2 déplaçant l'élément mobile 16 de l'organe de commande 4.

L'organe de commande 4 peut comporter un élément de préhension 15, solidaire de l'élément mobile 16, c'est-à-dire rigidement lié à l'élément mobile 16. L'élément de préhension 15 est par exemple fait de matière avec l'élément mobile 16 ou clipsé sur l'élément mobile 16 ou fixé par goupillon ou par tout autre moyen de fixation connu. Alternativement, l'élément de préhension 15 peut être couplé à l'élément mobile 16 via un système d'engrenages, chaînes, courroies ou tout autre moyen mécanique permettant d'assurer un couplage entre l'élément de préhension 15 et l'élément mobile 16.

Un retour haptique est généré à l'utilisateur qui déplace l'élément mobile 16, par exemple via l'élément de préhension 15, par modification du champ magnétique appliqué au fluide magnéto-rhéologique 17. On désigne par « haptique » un retour par le toucher, tel qu'une force de résistance variable.

En effet, le fluide magnéto-rhéologique 17 présente la propriété que sa viscosité varie sous l'effet d'un champ magnétique variable. Ainsi, la force de résistance induite par le fluide magnéto-rhéologique 17 est faible lorsqu'aucun champ magnétique n'est appliqué et devient de plus en plus importante lorsque l'intensité du champ magnétique augmente. Les fluides magnéto-rhéologiques peuvent ainsi être utilisés en tant que freins magnéto-rhéologique. Par exemple, l'application d'une intensité en forme de créneau permet de créer des points durs au niveau de points d'indexage pour lesquels l'intensité est importante.

Le champ magnétique créé par une bobine 18 étant proportionnel au courant qui la traverse, on peut faire varier l'intensité du champ magnétique créé au centre de la bobine 18 en faisant varier l'alimentation de la bobine 18. La variation de l'intensité du champ magnétique appliqué au fluide magnéto-rhéologique 17, permet de faire varier la viscosité du fluide, et ainsi la force de résistance exercée par le fluide. On peut ainsi faire varier ou moduler la force avec laquelle l'élément mobile 16 peut être déplacé pour générer un retour haptique spécifique à l'utilisateur 2 manipulant l'élément mobile 16.

Le module de fluide magnéto-rhéologique 13 peut en outre comporter un capteur de position 20, configuré pour mesurer la position de déplacement de l'élément mobile 16, telle que la position angulaire dans le cas illustré d'un élément mobile 16 rotatif. Il peut par exemple comporter un encodeur, tel qu'un encodeur optique ou un dispositif piézo-électrique. Le capteur de position peut être situé à différents endroits à proximité de l'élément mobile 16.

Le capteur de couple 21 peut par exemple fournir un signal, telle qu'une tension de sortie, représentatif de l'intensité de l'effort exercé sur l'élément mobile 16. Il peut en outre, en même temps, fournir un sens de rotation de l'élément mobile 16.

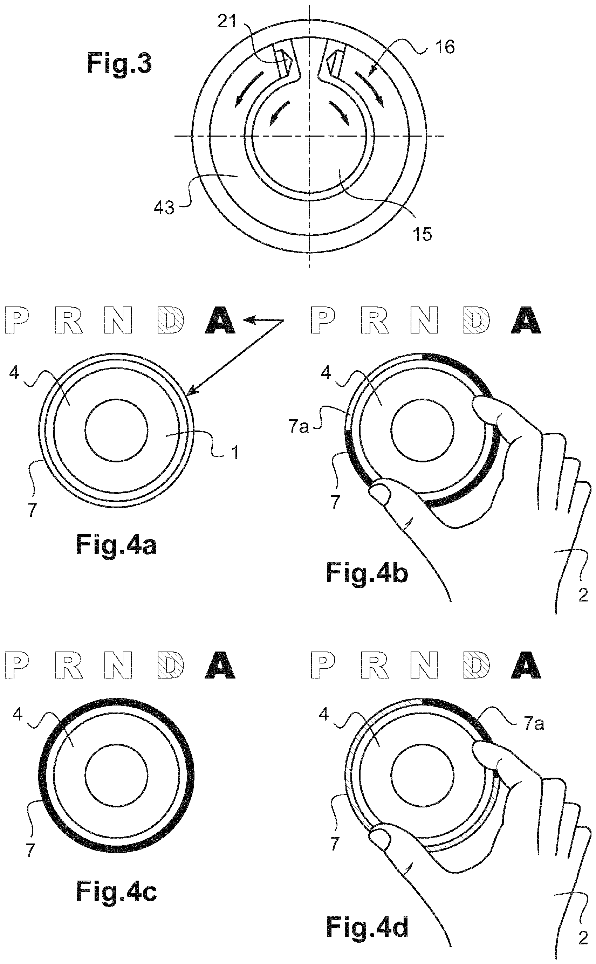

Dans l'exemple de réalisation de la figure 3, l'élément de préhension 15 est monté pivotant par rapport à une bague 43 de l'élément mobile 16, le pivotement de l'élément de préhension 15 étant bloqué par deux capteurs de couple 21 situés entre l'élément de préhension 15 et la bague 43 de l'élément mobile 16.

Alternativement, un seul capteur de couple 21 peut être utilisé, par exemple en appliquant une précontrainte au capteur, la rotation de l'élément de préhension 15 dans un sens entraînant une sous-contrainte détectable tandis que la rotation dans l'autre sens entraîne une sur-contrainte également détectable.

Selon l'exemple de réalisation illustré sur la figure 2, le module de fluide magnéto-rhéologique 13 comporte une embase 19 présentant une forme générale cylindrique s'étendant selon un axe de rotation Z du module 13, obturée à l'une de ses extrémités par un axe central fixe 10 orienté selon l'axe de rotation Z, définissant une cavité annulaire 11. L'élément rotatif 16 est monté rotatif sur l'embase 19 fixe, autour de l'axe de rotation Z.

La cavité 11 est destinée à recevoir d'une part le fluide magnéto-rhéologique 17 et d'autre part une extrémité de l'élément rotatif 16. L'élément rotatif 16 est alors partiellement immergé dans le fluide magnéto-rhéologique 17. L'embase 19 présente également un logement annulaire 12 qui entoure au moins partiellement la cavité 11. Le logement annulaire 12 reçoit une ou plusieurs bobine(s) 18 qui, avec son (leurs) alimentation(s) (non représentée(s)), forme l'unité d'application d'un champ magnétique 14 sur le fluide magnéto-rhéologique 17.

La force de résistance appliquée par le fluide magnéto-rhéologique 17 sur l'élément rotatif 16 varie en fonction de la surface de fluide en contact avec l'élément rotatif 16. Ainsi, l'extrémité de l'élément rotatif 16 en contact avec le fluide magnéto-rhéologique 17 peut comporter plusieurs parois d'extrémité 133 cylindriques et concentriques, s'étendant selon l'axe de rotation Z, et venant en regard de parois complémentaires s'étendant depuis le fond de la cavité 11. Par exemple, l'embase 9 comporte une paroi complémentaire 144, venant s'intercaler entre les parois d'extrémité 133 de l'élément rotatif 16 pour augmenter les surfaces en regard entre l'élément rotatif 16 et l'embase 19 et ainsi augmenter le couple de force que l'on peut exercer sur l'élément rotatif 16 avec une alimentation donnée.

Le module de fluide magnéto-rhéologique 13 comporte en outre des joints 166, par exemple intercalés d'une part, entre la cavité 11 et un couvercle 155 fermant la cavité 11 et d'autre part, entre la cavité 11 et un épaulement de l'élément rotatif 16. Les joints 166 assurent l'étanchéité pour éviter toute fuite du fluide magnéto-rhéologique 17 hors de la cavité 11. Le couvercle 155 comprend également un logement recevant un palier ou roulement à billes 177 qui assure la liaison en rotation entre l'embase 19 et l'élément rotatif 16.

Différentes formes ou profils de retour haptique peuvent être obtenus.

Le traitement des signaux issus du capteur de position 20 et du capteur de force 21 est réalisé par l'unité de traitement 3 qui pilote l'unité d'application d'un champ magnétique 14, programmant ainsi un moyen de freinage de l'organe de commande 4 permettant d'opposer une force de résistance à l'utilisateur 2 déplaçant l'organe de commande 4.

Le capteur de force 21 est configuré pour mesurer une force exercée sur l'organe de commande 4.

Dans le cas d'un organe de commande 4 réalisé par un bouton rotatif de commande, le capteur de force 21 comporte au moins un capteur de couple pour mesurer le couple exercé sur l'organe de commande 4.

Le capteur de force 21 permet de mesurer la force exercée sur l'organe de commande 4, par exemple par une technologie piézo-résistive, capacitive, résistive ou tout autre technologie connue de l'homme du métier pour détecter une variation de force comme par exemple des jauges de contrainte, etc...

L'unité de traitement est en outre configurée pour commander l'unité d'application d'un champ magnétique 14 afin d'autoriser le déplacement de l'organe de commande 4 vers une position de commande sélectionnée par l'utilisateur 2 lorsqu'un effort exercé sur l'organe de commande 4 est supérieur à un seuil d'effort prédéterminé au-delà d'une durée prédéterminée.

Pour cela, l'unité d'application d'un champ magnétique 14 abaisse le champ magnétique appliqué au fluide magnéto-rhéologique 17 lorsque l'effort exercé sur l'organe de commande 4 est supérieur à un seuil d'effort prédéterminé au-delà d'une durée prédéterminée.

On prévoit en outre que le sélecteur 1 comporte un indicateur lumineux 7 comportant des moyens d'éclairage progressifs pour modifier progressivement l'éclairage de l'indicateur lumineux 7 en fonction de la durée de l'exercice de l'effort sur l'organe de commande 4 au-delà du seuil d'effort prédéterminé.

Les moyens d'éclairage progressifs comportent par exemple un ensemble de LED, les LEDs s'allumant successivement en fonction de la durée de l'exercice de l'effort sur l'organe de commande 4.

L'indicateur lumineux 7 forme par exemple un chemin lumineux, présentant une forme de cercle ou de ligne, dont l'éclairage est progressivement modifié, le chemin lumineux étant complètement modifié à la fin de la durée prédéterminée. La modification de l'éclairage pouvant être l'allumage progressif du chemin lumineux ou son changement de couleur.

Dans le cas d'un organe de commande 4 réalisé par un bouton rotatif de commande, l'indicateur lumineux 7 peut être un anneau entourant au moins partiellement l'organe de commande 4. On modifie ainsi l'éclairage de la périphérie de l'anneau lumineux 7 de manière progressive sur 360° lorsque l'effort exercé sur l'organe de commande 4 est supérieur au seuil d'effort prédéterminé.

L'utilisateur 2 peut ainsi visualiser que sa commande a bien été prise en compte. L'animation de l'affichage lui permet également d'estimer le temps qu'il lui reste à maintenir l'effort exercé sur l'organe de commande 4 pour changer la commande.

Selon un exemple de réalisation illustré sur les figures 1, 4a, 4b, 4c et 4d, l'organe de commande 4 est configuré pour sélectionner au moins une position de commande :
- d'un mode de stationnement P (ou « Park » en anglais) pour lequel les roues du véhicule sont bloquées,
- d'un mode de marche arrière R (ou « Reverse » en anglais) pour activer la marche arrière,
- d'un mode de point mort N (ou « Neutral » en anglais) dans lequel les roues sont débloquées,
- d'au moins un mode de marche avant D (ou « Drive » en anglais) pour lequel toutes les vitesses sont possibles, et
- éventuellement d'un mode de conduite autonome A.

L'organe de commande 4 est configuré pour sélectionner une position de commande parmi ces différentes positions de commande en fonction de la volonté de l'utilisateur 2, chaque position de commande étant situé sur une course de déplacement que l'organe de commande 4 peut parcourir.

Le mode de conduite autonome A (ou mode de conduite automatique ou semi-automatique) permet au véhicule une conduite sans pilote, en totale autonomie ou semi-autonome. Pour cela, le véhicule comporte un système de conduite autonome 5 relié par exemple à des radars, à des moyens de télédétection par laser, à des caméras ou autres capteurs, permettant au véhicule de circuler sans pilote tout en gérant les éléments environnementaux extérieurs, tels que les feux stop, piétons, autres véhicules en mouvement ou à l'arrêt ou autres obstacles.

L'organe de commande 4 de boite de vitesse automatique 9 de certains modèles de véhicules sont également configurés pour prendre plusieurs position de commande de mode de marche avant D, comme une position de commande d'un mode de conduite citadine 3 (seules les trois premières vitesses sont utilisées) ou une position de commande d'un mode de conduite à faible allure S (pour « Second » en anglais) (seules les deux premières vitesses sont utilisées par exemple en cas de verglas, neige, frein moteur pour forte pente à descendre ...) ou une position de commande d'un mode de conduite à très faible allure L (pour « Low » en anglais) (maintient d'une conduite à faible allure en cas de verglas, forte côte à monter...). D'autres modèles proposent encore une position de commande d'un mode de conduite sportive S pour laquelle les changements de rapports s'effectuent pour des régimes plus élevés et la rétrogradation lors du freinage est plus rapide) ou une position de commande d'un mode de conduite hiver W (pour « Winter » en anglais) pour laquelle le premier rapport enclenché est la seconde, ce qui limite le risque de patinage des roues lors du démarrage sur route verglacée.

Les différentes positions de commande qui peuvent être sélectionnées par l'organe de commande 4 sont configurées pour pouvoir être sélectionnées successivement, le long d'une course de déplacement pouvant être parcourue par l'organe de commande, l'une à la place de l'autre, avec une disposition ordonnée prédéfinie.

Ainsi, en déplaçant la sélection du mode de conduite autonome A vers le sélecteur 1 de la boite de vitesse automatique 9, l'utilisateur 2 choisit avec un seul sélecteur 1 tous les modes de conduite du véhicule. L'agencement de l'organe de commande 4 permettant la sélection de la position de commande du mode de conduite autonome A au niveau du sélecteur 1 de la boite de vitesse automatique 9 est ainsi plus intuitif pour le conducteur. Par ailleurs, le passage en mode de conduite autonome A peut alors dépendre de la position de commande active de la boite de vitesse automatique 9. En outre, cela libère de la place au niveau du volant.

On prévoit par exemple et comme visible sur la figure 1 que la position de commande du mode de conduite autonome A soit située à une extrémité de la disposition ordonnée, successivement à la position de commande du mode de marche avant D de sorte que la position de commande du mode de conduite autonome A puisse uniquement être sélectionnée après la sélection de la position de commande du mode de marche avant A.

La disposition prédéfinie est par exemple alors dans l'ordre : la position de commande du mode de stationnement P, la position de commande du mode de marche arrière R, la position de commande du mode de point mort N, la position de commande du mode de marche avant D et la position de commande du mode de conduite autonome A.

On s'assure ainsi que le mode de conduite autonome A ne puisse être activé sans que le véhicule soit auparavant passé en mode de marche avant D.

L'intensité du champ magnétique peut avoir une forme en créneau dans laquelle l'intensité est nulle ou faible sauf au niveau des positions P, R, N, D, A où cette intensité est forte de manière à créer une force de résistance importante.

On peut prévoir que le sélecteur 1 comporte un moyen de blocage de l'organe de commande 4 configuré pour bloquer le déplacement de l'organe de commande 4 vers la position de commande du mode de conduite autonome A en fonction d'un signal de blocage d'un système de conduite autonome 5.

Le signal de blocage du système de conduite autonome 5 est lié à la situation routière. Il est envoyé à une unité de traitement 3 configurée pour piloter le moyen de blocage.

Le système de conduite autonome 5 est par exemple relié au dispositif de navigation du véhicule. On bloque par exemple le déplacement de l'organe de commande 4 vers la position de commande du mode de conduite autonome A lorsque le véhicule est localisé sur de petites routes ou hors autoroute.

Selon un autre exemple, le système de conduite autonome 5 comporte des capteurs, tel que des caméras ou radar, permettant d'évaluer la densité du trafic automobile pour décider si le mode de conduite autonome A est disponible ou pas.

Le moyen de blocage est réalisé par la programmation d'une force de résistance à l'utilisateur 2 importante vers la position de commande du mode de conduite autonome A, bloquant le déplacement de l'organe de commande 4 vers la position de commande du mode de conduite autonome A.

L'unité de traitement 3 envoie par exemple l'information de la position de commande sélectionnée sur le bus CAN du véhicule automobile, également relié à la boite de vitesse automatique 9 et au système de conduite autonome 5.

Le sélecteur 1 peut en outre comporter des voyants lumineux, par exemple autant de voyants lumineux que de positions de commande pouvant être sélectionnées par l'organe de commande 4, configurés pour s'éclairer en fonction de la position de commande sélectionnée par l'organe de commande 4.

Les voyants lumineux présentent par exemple une forme de lettre, telle que les lettres P, R, D, N, A.

On peut en outre associer une couleur distincte pour le voyant lumineux indiquant la position de commande du mode de conduite autonome A.

Un voyant lumineux A peut être configuré pour clignoter lorsque la position de commande du mode de conduite autonome A est disponible.

On va décrire un exemple de fonctionnement en référence aux figures 4a, 4b, 4c, 4d.

On considère tout d'abord que l'organe de commande 4 de la boite de vitesse automatique 9 sélectionne la position de commande du mode de marche avant D (figure 4a). La lettre D est éclairée. L'anneau lumineux 7 est éteint. En outre, la lettre A clignote (par exemple d'une autre couleur que la lettre D) pour indiquer au conducteur que la situation routière autorise le passage en mode de conduite autonome A.

Si l'utilisateur 2 souhaite basculer en mode de conduite autonome A, il exerce un couple sur le bouton rotatif de commande 4 vers la position de commande à atteindre.

On mesure l'intensité et/ou la durée de l'effort exercé sur le bouton rotatif de commande 4.

On bloque le déplacement du bouton rotatif de commande 4 tant que l'intensité et la durée de l'effort exercés sur le bouton rotatif de commande 4 n'ont pas atteint un seuil d'effort et de durée prédéfini. Pour cela, l'intensité du champ magnétique appliquée sur le fluide magnéto-rhéologique 17 est importante de manière à créer une force de résistance bloquant la mobilité du bouton rotatif de commande 4 qui ne tourne pas.

Pendant que le déplacement du bouton rotatif de commande 4 est bloqué, on affiche par un signal lumineux la progression de la durée de l'exercice de l'effort. La périphérie de l'anneau lumineux 7 s'éclaire alors de manière progressive, en fonction de la durée pendant laquelle l'effort est exercé sur le bouton rotatif de commande 4, tant que l'effort exercé est supérieur au seuil d'effort prédéterminé et jusqu'à ce que le temps dépasse le seuil de durée prédéterminée (figure 4b).

Une portion 7a non éclairée de l'indicateur lumineux 7 (figure 4b) ou éclairée d'une couleur différente (figure 3d) correspond à la durée restant à s'écouler avant que le changement de position P, R, N, D, A ne soit autorisé.

La couleur de l'éclairage de l'anneau lumineux 7 en progression est par exemple la même que celle de la lettre indiquant la position de commande à atteindre.

Lorsque le seuil de durée prédéterminée est atteint, la position de commande du mode de conduite autonome A est activée. La lettre A est éclairée tandis que la lettre D s'éteint.

En outre, on libère le déplacement du bouton rotatif de commande 4 vers la position de commande à atteindre lorsque le seuil d'effort et de durée prédéterminée sont franchis. Pour cela, l'unité d'application d'un champ magnétique 14 abaisse le champ magnétique appliqué au fluide magnéto-rhéologique 17, laissant l'élément mobile 16 tourner (figure 4c).

Pour revenir en mode de conduite de marche avant D, l'utilisateur 2 exerce par exemple un couple dans le sens de rotation contraire sur le bouton rotatif de commande 4.

Par contre, de façon générale et similaire à des commande de régulation de vitesse, toute intervention du conducteur dans la conduite, par exemple un freinage, un débrayage, une action sur le volant ou sur l'accélérateur fait passer automatiquement le sélecteur 1 en mode de marche avant D. Par son action volontaire, le conducteur manifeste son souhait d'abandonner le mode de conduite autonome A et de reprendre le véhicule en mains.

De la même manière, le couple exercé est mesuré par le capteur de force 21. La périphérie de l'anneau lumineux 7 change de couleur alors de manière progressive tant que l'effort exercé sur le bouton rotatif de commande 4 est supérieur au seuil d'effort prédéterminé et jusqu'à ce que le temps dépasse le seuil de durée prédéterminée (figure 4d).

Lorsque le seuil de durée prédéterminée est atteint, la position de commande du mode de conduite autonome A est désactivée et la position de commande du mode de marche avant D est sélectionnée.

La lettre D est éclairée tandis que la lettre A clignote (figure 4a).

En outre, avec un organe de commande 4 programmable et rotatif, il n'est pas nécessaire que l'utilisateur 2 repositionne l'organe de commande 4 dans sa position initiale.

## Revendications

1. Sélecteur (1) de commande d'un véhicule automobile, comportant :
- un organe de commande (4) configuré pour sélectionner au moins une position de commande,
- un module de fluide magnéto-rhéologique (13) comprenant :
- un fluide magnéto-rhéologique (17) en contact avec un élément mobile (16) de l'organe de commande (4),
- une unité d'application d'un champ magnétique (14),
- au moins une bobine (18) pour appliquer un champ magnétique au fluide magnéto-rhéologique (17),
- l'unité d'application d'un champ magnétique (14) étant configurée pour modifier l'alimentation de la bobine (18) afin de modifier une force de résistance générée à l'utilisateur déplaçant l'organe de commande (4),
- un capteur de force (21) configuré pour mesurer une force exercée sur l'organe de commande (4), et
- une unité de traitement (3) reliée au capteur de force (21), configurée pour commander l'unité d'application d'un champ magnétique (14) afin d'autoriser le déplacement de l'organe de commande (4) vers une position de commande sélectionnée par l'utilisateur (2) lorsqu'un effort exercé sur l'organe de commande (4) est supérieur à un seuil d'effort prédéterminé au-delà d'un seuil de durée prédéterminée,
**caractérisé en ce qu'**il comporte un indicateur lumineux (7) comportant des moyens d'éclairage progressifs pour modifier progressivement l'éclairage de l'indicateur lumineux (7) en fonction de la durée de l'exercice de l'effort sur l'organe de commande (4) au-delà du seuil d'effort prédéterminé.

2. Sélecteur (1) selon la revendication précédente, **caractérisé en ce que** l'indicateur lumineux (7) forme un chemin lumineux dont l'éclairage est progressivement modifié, le chemin lumineux étant complètement modifié à la fin de la durée prédéterminée.

3. Sélecteur (1) selon la revendication précédente, **caractérisé en ce que** le chemin lumineux présente une forme de cercle ou de ligne.

4. Sélecteur (1) selon l'une des revendications précédentes, **caractérisé en ce que** ledit organe de commande (4) est un bouton rotatif de commande, un levier pivotant ou un coulisseau de commande mobile linéairement.

5. Sélecteur (1) selon l'une des revendications précédentes, **caractérisé en ce que** l'organe de commande (4) est un bouton rotatif de commande et l'indicateur lumineux (7) est un anneau entourant au moins partiellement l'organe de commande (4).

6. Sélecteur (1) selon l'une des revendications précédentes, **caractérisé en ce que** l'organe de commande (4) est un bouton rotatif de commande, le capteur de force (21) comportant au moins un capteur de couple pour mesurer le couple exercé sur l'organe de commande (4).

7. Sélecteur (1) selon l'une des revendications précédentes, **caractérisé en ce que** l'organe de commande (4) est configuré pour sélectionner une position de commande d'une boite de vitesses automatique (9), les positions de commande activant un mode de stationnement (P), un mode de marche arrière (R), un mode de point mort (N) et au moins un mode de marche avant (D).

8. Sélecteur (1) selon la revendication précédente, **caractérisé en ce que** l'organe de commande (4) est en outre configuré pour sélectionner une position de commande d'un mode de conduite autonome (A).

9. Sélecteur (1) selon l'une des revendications 1 à 6, **caractérisé en ce que** l'organe de commande (4) est configuré pour sélectionner un paramètre du système de climatisation, de radio, du téléphone, de ventilation ou de navigation.

10. Procédé de sélection d'une commande d'un véhicule automobile **caractérisé en ce qu'**il soit mis en oeuvre par un sélecteur (1) selon l'une des revendications précédentes, dans lequel :
- on exerce un effort sur l'organe de commande (4) du sélecteur (1) vers une position de commande à atteindre,
- on mesure l'intensité et la durée de l'effort exercé sur l'organe de commande (4),
- on bloque le déplacement de l'organe de commande (4) tant que l'intensité et la durée de l'effort exercé sur l'organe de commande (4) n'ont pas atteint un seuil d'effort sur une durée prédéfinie et on affiche par un signal lumineux la progression de la durée pendant laquelle l'effort est exercé, et
- on libère le déplacement de l'organe de commande (4) vers la position de commande à atteindre lorsque le seuil de durée prédéterminée est franchi.

## Patentansprüche

1. Befehlsselektor (1) eines Kraftfahrzeugs, welcher aufweist:
- ein Steuerorgan (4), das dafür ausgelegt ist, wenigstens eine Steuerposition auszuwählen,
- ein auf einem magnetorheologischen Fluid basierendes Modul (13), welches umfasst:
- ein magnetorheologisches Fluid (17), das mit einem beweglichen Element (16) des Steuerorgans (4) in Kontakt steht,
- eine Einheit zum Anlegen eines Magnetfeldes (14),
- wenigstens eine Spule (18) zum Anlegen eines Magnetfeldes an das magnetorheologische Fluid (17),
- wobei die Einheit zum Anlegen eines Magnetfeldes (14) dafür ausgelegt ist, die Stromversorgung der Spule (18) zu verändern, um eine Widerstandskraft zu verändern, die für den das Steuerorgan (4) bewegenden Benutzer erzeugt wird,
- einen Kraftsensor (21), der dafür ausgelegt ist, eine auf das Steuerorgan (4) ausgeübte Kraft zu messen, und
- eine mit dem Kraftsensor (21) verbundene Verarbeitungseinheit (3), die dafür ausgelegt ist, die Einheit zum Anlegen eines Magnetfeldes (14) zu steuern, um die Bewegung des Steuerorgans (4) zu einer vom Benutzer (2) ausgewählten Steuerposition hin zu erlauben, wenn eine auf das Steuerorgan (4) ausgeübte Kraft länger als über eine vorbestimmte Schwellenwertdauer größer als ein vorbestimmter Kraftschwellenwert ist,
**dadurch gekennzeichnet, dass** er eine Leuchtanzeige (7) aufweist, die Mittel zur schrittweisen Beleuchtung aufweist, um die Beleuchtung der Leuchtanzeige (7) in Abhängigkeit von der Dauer der Ausübung der den vorbestimmten Kraftschwellenwert übersteigenden Kraft auf das Steuerorgan (4) schrittweise zu ändern.

2. Selektor (1) nach dem vorhergehenden Anspruch, **dadurch gekennzeichnet, dass** die Leuchtanzeige (7) einen Leuchtweg bildet, dessen Beleuchtung schrittweise geändert wird, wobei der Leuchtweg am Ende der vorbestimmten Dauer vollständig geändert ist.

3. Selektor (1) nach dem vorhergehenden Anspruch, **dadurch gekennzeichnet, dass** der Leuchtweg eine Kreis- oder Linienform aufweist.

4. Selektor (1) nach einem der vorhergehenden Ansprüche, **dadurch gekennzeichnet, dass** das Steuerorgan (4) ein Steuerdrehknopf, ein Schwenkhebel oder ein geradlinig beweglicher Steuerschieber ist.

5. Selektor (1) nach einem der vorhergehenden Ansprüche, **dadurch gekennzeichnet, dass** das Steuerorgan (4) ein Steuerdrehknopf ist und die Leuchtanzeige (7) ein Ring ist, der das Steuerorgan (4) wenigstens teilweise umgibt.

6. Selektor (1) nach einem der vorhergehenden Ansprüche, **dadurch gekennzeichnet, dass** das Steuerorgan (4) ein Steuerdrehknopf ist, wobei der Kraftsensor (21) wenigstens einen Drehmomentsensor aufweist, um das auf das Steuerorgan (4) ausgeübte Drehmoment zu messen.

7. Selektor (1) nach einem der vorhergehenden Ansprüche, **dadurch gekennzeichnet, dass** das Steuerorgan (4) dafür ausgelegt ist, eine Steuerposition eines Automatikgetriebes (9) auszuwählen, wobei die Steuerpositionen einen Parkmodus (P), einen Rückwärtsfahrmodus (R), einen Neutralmodus (N) und wenigstens einen Vorwärtsfahrmodus (D) aktivieren.

8. Selektor (1) nach dem vorhergehenden Anspruch, **dadurch gekennzeichnet, dass** das Steuerorgan (4) außerdem dafür ausgelegt ist, eine Steuerposition eines autonomen Fahrmodus (A) auszuwählen.

9. Selektor (1) nach einem der Ansprüche 1 bis 6, **dadurch gekennzeichnet, dass** das Steuerorgan (4) dafür ausgelegt ist, einen Parameter des Klimatisierungs-, Radio-, Telefon-, Belüftungs- oder Navigationssystems auszuwählen.

10. Verfahren zur Auswahl eines Befehls eines Kraftfahrzeugs, **dadurch gekennzeichnet, dass** es von einem Selektor (1) nach einem der vorhergehenden Ansprüche durchgeführt wird, wobei:
- eine Kraft auf das Steuerorgan (4) des Selektors (1) zu einer zu erreichenden Steuerposition hin ausgeübt wird,
- die Stärke und die Dauer der auf das Steuerorgan (4) ausgeübten Kraft gemessen werden,
- die Bewegung des Steuerorgans (4) blockiert wird, solange die Stärke und die Dauer der auf das Steuerorgan (4) ausgeübten Kraft nicht über eine vordefinierte Dauer einen Kraftschwellenwert erreicht haben, und der Fortschritt der Dauer, während der die Kraft ausgeübt wird, durch ein Leuchtsignal angezeigt wird, und
- die Bewegung des Steuerorgans (4) zu der zu erreichenden Position hin freigegeben wird, wenn der vorbestimmte Schwellenwert der Dauer überschritten ist.

## Claims

1. Control selector (1) for a motor vehicle, comprising:
- a control member (4) designed to select at least one control position,
- a magnetorheological fluid module (13) comprising:
- a magnetorheological fluid (17) in contact with a movable element (16) of the control member (4),
- a magnetic field application unit (14),
- at least one winding (18) designed to apply a magnetic field to the magnetorheological fluid (17),
- the magnetic field application unit (14) being designed to modify the power supplied to the winding (18) in order to modify the resistive force generated for the user moving the control member (4),
- a force sensor (21) designed to measure a force exerted on the control member (4), and
- a processing unit (3) linked to the force sensor (21) that is designed to control the magnetic field application unit (14) to authorize the movement of the control member (4) to a control position selected by the user (2) if a force exerted on the control member (4) is greater than a predetermined force threshold after a predetermined threshold duration,
**characterized in that** it includes a luminous indicator (7) including gradual lighting means for gradually modifying the lighting of the luminous indicator (7) as a function of the duration of the force exerted on the control member (4) beyond a predetermined force threshold.

2. Selector (1) according to the preceding claim, **characterized in that** the luminous indicator (7) forms a luminous path in which the lighting is gradually modified, the luminous path being completely modified after a predetermined duration.

3. Selector (1) according to the preceding claim, **characterized in that** the luminous path is in the form of a circle or a line.

4. Selector (1) according to one of the preceding claims, **characterized in that** said control member (4) is a rotary control button, a pivoting lever or a linear control slider.

5. Selector (1) according to one of the preceding claims, **characterized in that** the control member (4) is a rotary control button and the luminous indicator (7) is a ring at least partially surrounding the control member (4).

6. Selector (1) according to one of the preceding claims, **characterized in that** the control member (4) is a rotary control button, the force sensor (21) having at least one torque sensor to measure the torque exerted on the control member (4).

7. Selector (1) according to one of the preceding claims, **characterized in that** the control member (4) is designed to select a control position for an automatic gearbox (9), the control positions activating a parking mode (P), a reversing mode (R), a neutral mode (N) and at least one forward drive mode (D).

8. Selector (1) according to the preceding claim, **characterized in that** the control member (4) is also designed to select a control position for a self-driving mode (A).

9. Selector (1) according to one of Claims 1 to 6, **characterized in that** the control member (4) is designed to select a parameter of the air conditioning, radio, telephone, ventilation or navigation systems.

10. Control selection method for a motor vehicle **characterized in that** it is implemented using a selector (1) according to one of the preceding claims, in which:
- a force is exerted on the control member (4) of the selector (1) towards a desired control position,
- the intensity and duration of the force exerted on the control member (4) are measured,
- the movement of the control member (4) is blocked until the intensity and the duration of the force exerted on the control member (4) reach a force threshold for a predetermined duration, and a luminous signal indicates the progression of the duration for which the force has been exerted, and
- the movement of the control member (4) is released towards the desired control position when the predetermined threshold duration is reached.
